# EUROPEAN PATENT APPLICATION

(11) **EP 2 674 854 A2**
(43) Date of publication of application: **18.12.2013**
(21) Application number: 13172079.9
(22) Date of filing: 14.06.2013
(51) Int. Cl.: G06F 3/16, H04N 21/422, G10L 15/26

(54) **Display apparatus, method for controlling the display apparatus, server and method for controlling the server.**

(30) Priority: 15.06.2012 KR 20120064500
(71) Applicant: Samsung Electronics Co., Ltd, Gyeonggi-do 443-742 (KR)
(72) Inventor: Yoon, Seung-il, Gyeonggi-do (KR); Kim, Ki-suk, Gyeonggi-do (KR); Cho, Sung-kil, Gyeonggi-do (KR); Heo, Hye-hyun, Seoul (KR)
(74) Representative: Brandon, Paul Laurence

(57) **Abstract**

A display apparatus (100) is disclosed. The display apparatus (100) includes a voice collecting unit which collects a user's voice; a first communication unit which transmits the user's voice to a first server (200), and receives text information corresponding to the user's voice from the first server (200); a second communication unit which transmits the received text information to a second server (300), and receives response information corresponding to the text information; an output unit (140) which outputs a response message corresponding to the user's voice based on the response information; and a control unit which controls the output unit (140) to output a response message differentiated from a response message corresponding to a previously collected user's voice, when a user's voice having a same utterance intention is re-collected.

## Description

### BACKGROUND

### 1. Field

Methods and apparatuses consistent with the exemplary embodiments relate to a display apparatus, method for controlling the display apparatus, and server and method for controlling the server, and more particularly, to a display apparatus which is interconnected with a server and is controlled according to a user's voice, and a method for controlling the display apparatus, server, and method for controlling the server thereof.

### 2. Description of the Related Art

Thanks to the development of electronic technologies, various types of display apparatuses are being developed and distributed, the display apparatuses having various functions. Recently, TVs are connected with the internet to provide internet services, and a user is able to view numerous digital broadcasting channels through such TVs.

Meanwhile, technologies which use voice recognition are being developed to control display apparatuses more conveniently and intuitively. In particular, TVs are able to perform functions of recognizing a user's voice, and perform functions which correspond to a user's voice such as volume control and changing channels.

However, conventional display apparatuses which recognize a user's voice only provide functions corresponding to a recognized voice, and not interactive information through dialogue with users, which is a limitation.

### SUMMARY

An aspect of the exemplary embodiments relates to a display apparatus which may be interconnected with an external server and enable dialogue with a user, a method for controlling the display apparatus, server, and method for controlling the server thereof.

According to an exemplary embodiment, a display apparatus may comprise a voice collector configured to collect a voice of a user; a first communicator configured to transmit the voice to a first server, and receive text information corresponding to the voice from the first server; a second communicator configured to transmit the received text information to a second server, and receive response information corresponding to the text information; an outputter configured to output a response message corresponding to the voice based on the response information; and a controller configured to control the outputter to output a second response message differentiated from a first response message corresponding to a previously collected user's voice, when a user's voice having a same utterance intention as the previously collected user's invoice is re-collected.

Herein, the second server may analyze the text information to determine an utterance intention included in the voice, and transmit the response information corresponding to the determined utterance intention to the display apparatus.

In addition, the second server may generate second response information corresponding to second text information to be differentiated from first response information corresponding to first text information and transmit the generated second response information to the display apparatus, when utterance intentions included in the sequentially received the first text information and the second text information are the same.

Furthermore, the controller may output a response message corresponding to a re-received user's voice through the output unit as at least one from among voice data and a text, based on the second response information corresponding to the second text information.

In addition, the controller may control the outputter to output an audio volume of contents output from the display apparatus to be relatively lower than volume of voice output as the response message, based on the second response information corresponding to the second text information.

Furthermore, the controller may output a response message corresponding to a re-received user's voice as a text where a predetermined keyword is highlighted, based on the second response information corresponding to the second text information.

Meanwhile, according to an exemplary embodiment, a server which is interconnected with a display apparatus may include a communicator configured to receive text information corresponding to a voice of a user collected in the display apparatus; and a controller configured to analyze the text information to determine an utterance intention included in the voice, and control the communicator to transmit response information corresponding to the determined utterance intention to the display apparatus, wherein the controller is configured to generate second response information corresponding to the second text information to be differentiated from first response information corresponding to first text information and transmit the generated second response information to the display apparatus, when utterance intentions included in the first text information and the second text information are the same.

Herein, the display apparatus may output a response message corresponding to the voice as at least one from among voice data and text, based on the response information.

In addition, the controller may generate first response information corresponding to the first text information so that the display apparatus outputs the response message as one of the voice and the text, and generates the second response information corresponding to the second text information so that the display apparatus outputs the response message as one of the voice and text, when the first text information and the second text information are sequentially received.

Furthermore, the controller may generate the second response information corresponding to the second text information so that audio volume of contents output from the display apparatus is lower than volume of voice output as the response message, when the first text information and the second text information are sequentially received.

In addition, the controller may generate the first response information corresponding to the first text information so that the display apparatus outputs the response message as a text, and generates the second response information corresponding to the second text information so that the display apparatus outputs the second response message as a text where a keyword is highlighted, when the first text information and the second text information are sequentially received.

Meanwhile, according to an exemplary embodiment, a control method of a display apparatus may include collecting a voice of a user; transmitting the voice to a first server, and receiving text information corresponding to the voice from the first server; transmitting the received text information to a second server, and receiving response information corresponding to the text information; and outputting a second response message differentiated from a first response message corresponding to a previously collected user's voice based on the response information, when a user's voice having a same utterance intention as the previously collected user's voice is re-collected.

Herein, the second server may analyze the text information and determine an utterance intention included in a user's voice, and transmit the response information corresponding to the determined utterance intention to the display apparatus.

In addition, the second server may generate second response information corresponding to second text information to be differentiated from first response information corresponding to first text information and transmit the generated second response information to the display apparatus, when utterance intentions included in the sequentially received first text information and second text information are the same.

Furthermore, the outputting may output a response message corresponding to a re-received user's voice re-received as at least one from among voice data and a text, based on the second response information corresponding to the second text information.

In addition, the outputting may comprise outputting audio volume of contents output from the display apparatus which is lower than volume of voice output as the response message, based on the response information corresponding to the second text information.

Furthermore, the outputting may comprise outputting the second response message corresponding to a re-received user's voice as a text where a keyword is highlighted, based on the second response information corresponding to the second text information.

Meanwhile, according to an exemplary embodiment, a control method of a server which is interconnected with a display apparatus may include receiving text information corresponding to a voice data of a user, collected in the display apparatus; analyzing the text information and determining an utterance intention included in the voice data; and generating second response information corresponding to second text information to be differentiated from first response information corresponding to first text information and transmitting the generated second response information corresponding to the second text information, to the display apparatus, when utterance intentions included in the first text information and second text information are the same.

Herein, the display apparatus may output a response message corresponding to the voice data as at least one from among voice data and a text based on the generated second response information.

In addition, the transmitting may comprise generating the first response information corresponding to the first text information so that the display apparatus outputs the response message as at least one from among voice data and a text, and generating the second response information corresponding to the second text information so that the display apparatus outputs the response message as at least one from among voice data and a text, when the first text information and the second text information are sequentially received.

Furthermore, the transmitting may comprise generating the second response information corresponding to the second text information so that audio volume of contents output from the display apparatus is lower than a volume of a voice output as the response message, when the first text information and the second text information are sequentially received.

In addition, the transmitting may comprise generating the first response information corresponding to the first text information so that the display apparatus outputs the response message, and generating the second response information corresponding to the second text information so that the display apparatus outputs the response message as a text where a keyword is highlighted, when the first text information and the second text information are sequentially received.

According to another exemplary embodiment, there is provided a display apparatus comprising: a voice collector configured to collect a voice; a communicator configured to transmit the voice to a first server, receive text information corresponding to the voice from the first server, transmit the received text information to a second server, and receive response information corresponding to the text information; an outputter configured to output a second response message corresponding to the voice based on the response information; and a controller configured to control the outputter to output the second response message, the second response message being differentiated from a first response message corresponding to a previously collected voice, when the voice having a same utterance intention as the previously collected voice is collected.

According to another exemplary embodiment, there is provided a server which interacts with a display apparatus, the server comprising: a communicator configured to receive first text information and second text information corresponding to a first voice and a second voice, respectively, collected in the display apparatus; and a controller configured to analyze the first text information and the second text information to determine an utterance intention included in the first voice and the second voice, and control the communicator to transmit response information corresponding to the determined utterance intentions to the display apparatus, wherein the controller is configured to generate second response information corresponding to second text information to be differentiated from first response information corresponding to the first text information, and transmits the generated second response information to the display apparatus, when utterance intentions included in the first text information and second text information are the same.

According to an exemplary embodiment, there is provided a control method of a display apparatus, the control method comprising: collecting a first voice and subsequently collecting a second voice; transmitting the first voice to a first server, transmitting the second voice to the first server, and receiving first text information and second text information corresponding to the respective first voice and second voice, from the first server; transmitting the received first text information and the second text information to a second server, and receiving first response information and second response information corresponding to the first text information and the second text information, respectively; and outputting a second response message differentiated from a first response message corresponding to the previously collected first voice based on the first response information, when the second voice has a same utterance intention as the previously collected first voice.

According to yet another exemplary embodiment, there is provided a control method of a display apparatus, the control method comprising: collecting a first voice and subsequently collecting a second voice; transmitting the first voice to a first server, transmitting the second voice to the first server, and receiving first text information and second text information corresponding to the respective first voice and second voice, from the first server; transmitting the received first text information and the second text information to a second server, and receiving first response information and second response information corresponding to the first text information and the second text information, respectively; and outputting a second response message differentiated from a first response message corresponding to the previously collected first voice based on the first response information, when the second voice has a same utterance intention as the previously collected first voice.

According to the aforementioned various exemplary embodiments, it is possible to provide a display apparatus which enable dialogue with a user, increasing convenience for the user. Furthermore, in a case where a user's voice having a same utterance intention is re-collected, the display apparatus may output a response message regarding the user's voice differently from before, thereby increasing understanding of the user.

### BRIEF DESCRIPTION OF THE DRAWINGS

The above and/or other aspects of exemplary embodiments will be more apparent with reference to the accompanying drawings, in which:

FIG. 1 is a view for explaining a dialogue type system according to an exemplary embodiment;

FIG. 2 is a timing view for explaining each operation of a dialogue type system illustrated in FIG. 1;

FIG. 3 is a block diagram for explaining a configuration of a display apparatus illustrated in FIG. 1;

FIG. 4 is a block diagram for explaining a detailed configuration of a display apparatus illustrated in FIG. 3;

FIG. 5 is a block diagram for explaining a configuration of a first server illustrated in FIG. 1;

FIG. 6 is a block diagram for explaining a configuration of a second server illustrated in FIG. 1;

FIG. 7 is a block diagram for explaining a detailed configuration of a second server illustrated in FIG. 6;

FIGs. 8 to 10 are views for explaining operations of a dialogue type system according to an exemplary embodiment;

FIG. 11 is a flowchart for explaining a method for controlling a display apparatus according to an exemplary embodiment; and

FIG. 12 is a flowchart for explaining a method for controlling a server interconnected with a display apparatus according to an exemplary embodiment.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

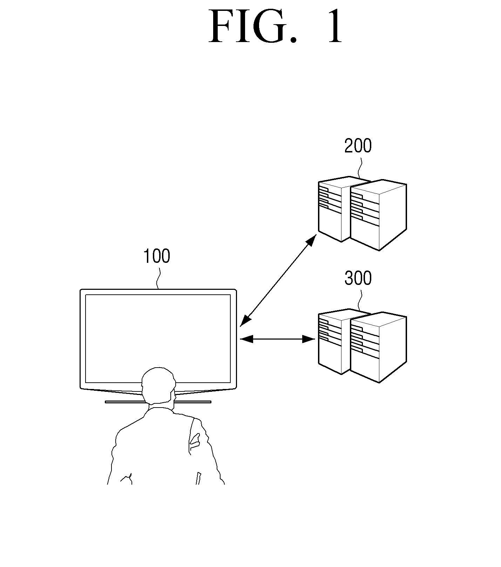

FIG. 1 is a view for explaining a dialogue type system according to an exemplary embodiment. As illustrated in FIG. 1, the dialogue type system includes a display apparatus 100, first server 200, and second server 300. The display apparatus 100 may be a smart TV as illustrated in FIG. 1, but this is only an example, and thus the display apparatus 100 may be embodied as various electronic devices such as mobile phones like smart phones, desktop personal computers (PCs), notebooks, and navigations etc.

Meanwhile, the display apparatus 100 may be controlled by a remote controller (not shown) to control the display apparatus 100. For example, if the display apparatus 100 is implemented with a television, the operation such as power on/off, channel change, and volume adjustment may be performed according to a control signal received from the remote controller (not shown).

The display apparatus 100 transmits a collected user's voice to the first server 200. A user's "voice" may include voice data, a voiced statement of a user, a voiced question of a user, a voiced sound of a user, or the like. When a user's voice is received from the display apparatus 100, the first server 200 converts the received user's voice into text information (or a text), and transmits the text information to the display apparatus 100.

In addition, the display apparatus 100 transmits the text information received from the first server 200 to the second server 300. When the text information is received from the display apparatus 100, the second server 300 generates response information corresponding to the received text information and transmits the generated response information to the display apparatus 100.

The display apparatus 100 may perform various operations based on the response information received from the second server 300. For example, the display apparatus 100 may output a response message corresponding to the user's voice. Herein, the response message may be output as at least one of voice or a text. More specifically, when a user's voice asking a broadcasting time of a broadcasting program is input, the display apparatus 100 may output the broadcasting time of the corresponding broadcasting program as voice or a text, or as a combination thereof.

Furthermore, the display apparatus 100 may perform a function corresponding to a user's voice. For example, when a user's voice for changing a channel is input, the display apparatus 100 may select and display the corresponding channel. In this case, the display apparatus 100 may provide a response message corresponding to the corresponding function together with the corresponding channel. In the aforementioned example, the display apparatus may output information on the changed channel or a message which shows that the channel change has been completed as at least voice or a text.

In particular, when a user's voice having a same utterance intention is re-collected, the display apparatus 100 may output a response message differentiated from a response message corresponding to a previously collected user's voice. That is, in the aforementioned example, in a case where a user's voice asking a broadcasting time of a broadcasting program is input and then a user's voice asking a broadcasting time of the same broadcasting program is input again, the display apparatus 100 may output a broadcasting time of a corresponding program in a form different from before through various methods.

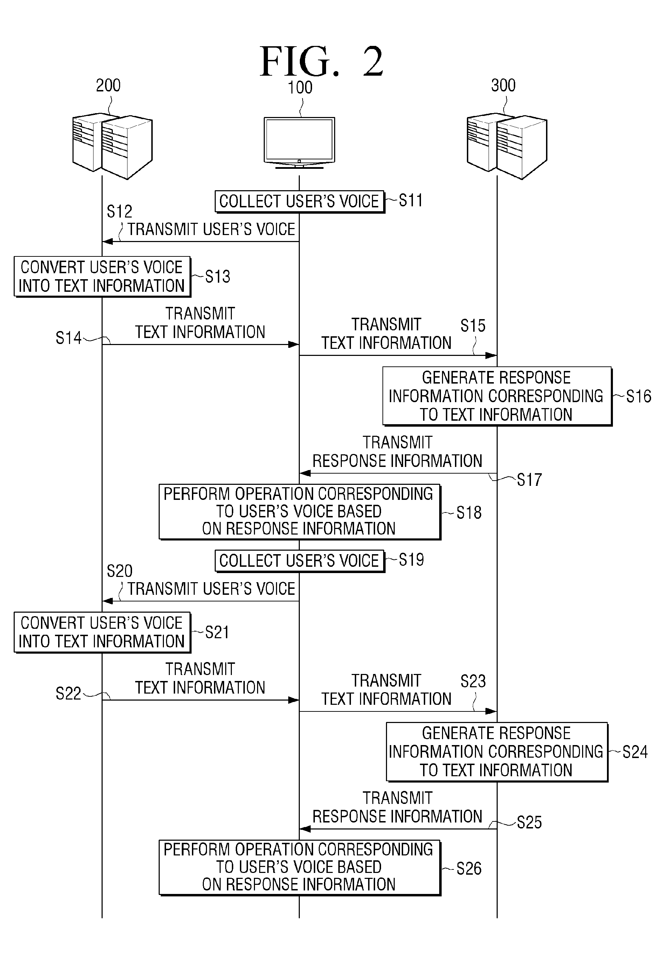

FIG. 2 is a timing view for explaining each operation of a dialogue type system illustrated in FIG. 1.

According to FIG. 2, the display apparatus 100 collects a user's voice (S11), and transmits the collected user's voice to the first server 200 (S12). More specifically, when a mode for collecting the user's voice is initiated, the display apparatus 100 may collect the user's voice that the user uttered within a predetermined distance and transmit the collected voice to the first server 200.

To this end, the display apparatus 100 may have a microphone for receiving the voice that the user uttered. In this case, the microphone may be embodied as to be provided inside the display apparatus 100 in an all-in-one type form or may be separate from the display apparatus 100. In the case where the microphone is provided separately from the display apparatus 100, the microphone may be embodied in a form where it may be held by the user, or placed on a table, and connected with the display apparatus 100 either via wire or wirelessly.

The first server 200 converts the users' voice collected from the display apparatus 100 into text information (S13). More specifically, the first server 200 may implement an STT (Speech to Text) algorithm to convert the users' voice received from the display apparatus 100 into text information. In addition, the first server 200 transmits the text information to the display apparatus 100 (S14).

The display apparatus 100 transmits the text information received from the first server 200 to the second server 300 (S15).

When the text information is received from the display apparatus 100, the second server 300 generates response information corresponding to the text information (S16), and transmits the response information to the display apparatus 100 (S17).

Herein, the response information includes response message information for outputting a response message in the display apparatus 100. The response message is an answer corresponding to the user's voice collected in the display apparatus 100, and the response message information may be the response message output from the display apparatus 100 regarding the user's voice expressed in a text format. Accordingly, the display apparatus 100 may output the response message corresponding to the users' voice as at least one of voice or a text based on the response message information. Furthermore, the response information may further include a control command for executing a function corresponding to the user's voice.

Meanwhile, the display apparatus 100 performs an operation corresponding to the user's voice, based on the received response information (S18).

More specifically, the display apparatus 100 may output the response message corresponding to the user's voice, based on the response message information included in the response information. That is, the display apparatus 100 may use the TTS (Text to Speech) algorithm to convert the text into voice and output the result, or configure a UI I (User Interface) screen to include the text forming the response message information and output the result, when the response message information having the text from is received from the second server 300.

For example, in a case where a user's voice which expresses "When is OOO (broadcasting program) broadcasted?", is collected in the display apparatus, the second server 300 may transmit a text format response message information which expresses, "On Saturday, at 7 o'clock pm" to the display apparatus 100. Accordingly, the display apparatus 100 may output the response message which expresses, "On Saturday night, at 7 o'clock pm" as at least one of voice or a text.

Furthermore, according to the control command included in the response information, the display apparatus 100 may control to perform a function corresponding to the user's voice. For example, in a case where a user's voice which expresses, "Record OOO(broadcasting program) in the display apparatus 100" is collected, the second server 300 may transmit a control command for performing a reserved recording function of "OOO" to the display apparatus 100. Accordingly, the display apparatus 100 may perform a reserved recording of the corresponding broadcasting program.

In this case, the response information may further include response message information corresponding to the function performed in the display apparatus 100. For example, in the aforementioned example, it is possible to transmit a text format response message information which expresses, "Reservation has been made for recording OOO" to the display apparatus 100 together with the control command, and the display apparatus 100 may output a response message which expresses, "Reservation has been made for recording OOO" as at least one of voice or a text while performing the reserved recording function.

Meanwhile, when a user's voice is re-collected (S19), the display apparatus transmits the re-collected user's voice to the first server 200 (S20), and the first server 200 converts the user's voice received from the display apparatus into text information (S21).

Next, when the first server transmits the text information to the display apparatus 100 (S22), the display apparatus 100 transmits the received text information to the second server 300 (S23).

Meanwhile, when the text information is received from the display apparatus 100, the second server 300 generates response information corresponding to the text information (S24), and transmits the generated text information to the display apparatus 100 (S25).

Herein, when a user's utterance intention included in the currently received text information is not the same as the user's utterance intention included in the previously received text information, the second server 300 generates response information in the same method and transmits the result to the display apparatus 100.

However, when the user's utterance intention included in the currently received text information is the same as the user's utterance intention included in the previously received text information, the second server 300 generates response information corresponding to the currently received text information to be differentiated from the previously generated response information and transmits the generated response information to the display apparatus 100.

For example, in a case where a user's voice which expresses "What is the name of the program being broadcasted right now?" is input and then a user's voice having the same utterance intention is input, a user's voice having the same utterance intention includes the same user's voice as before such as "What is the name of the program being broadcasted right now?" and a user's voice which may induce the same answer as before such as "What did you say?" or "Would you say that again?".

In this case, the second server 300 may generate response information so that a response message which expresses "The name of the broadcasting program you requested is OOO(broadcasting program)" is output as voice or a text in the display apparatus 100, or generate response information so that a response message which expresses, "The name of the broadcasting program you requested is OOO" is output as a text with the name of the broadcasting program highlighted. In addition, in a case where contents are being played in the display apparatus 100, the second server 300 may generate a control command which makes audio volume of contents output from the display apparatus 100 to be lower than voice volume output as a response message.

Meanwhile, the display apparatus 100 performs an operation corresponding to a user's voice based on response information (S26). In a case where a user's voice having a same utterance intention is re-collected, a response message corresponding to the current user's voice may be output in various forms so as to be differentiated from the response message corresponding to the previous user's voice.

More specifically, the display apparatus 100 may output a response message as voice or a text, or as a text with a predetermined keyword highlighted, or output voice volume of the response message to be higher than audio volume of contents output from the display apparatus 100.

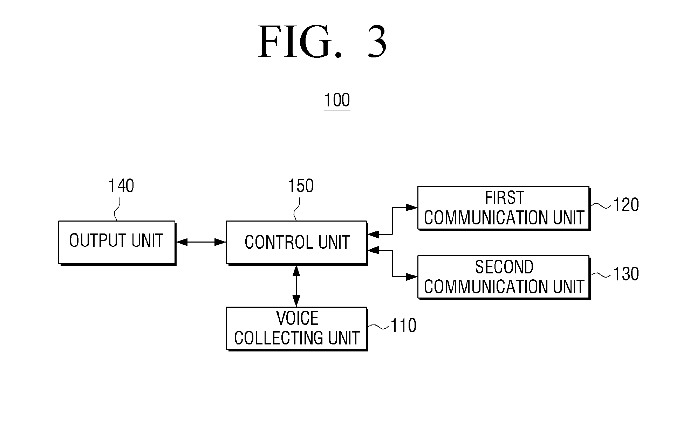

FIG. 3 is a block diagram for explaining a configuration of a display apparatus illustrated in FIG. 1. According to FIG. 3, the display apparatus 100 includes a voice collecting unit 110, first communication unit 120, second communication unit 130, output unit 140, and control unit 150.

The voice collecting unit 110 collects a user's voice. For example, the voice collecting unit 110 may be embodied as a microphone for collecting the user's voice, and may either be provided inside the display apparatus 100 in an all-in-one form, or separate from the display apparatus 100. In a case where the voice collecting unit 110 is separate from the display apparatus, the voice collecting unit 110 may be embodied to be held by the user, or placed on a table, and may be connected to the display apparatus 100 through a wired or wireless network to transmit the collected user's voice to the display apparatus 100.

In addition, the voice collection unit 110 may determine whether the collected user's voice is a voice uttered by a user or not, and filter noise from the voice (for example, air conditioning sound, cleaning sound, music sound, and the like).

Meanwhile, the voice collecting unit 110 may determine whether the collected user's voice is a voice uttered by a user or not. When the analog user's voice is input, the voice collection unit 110 samples the analog user's voice and converts the user's voice into a digital signal. The voice collection unit 110 calculates energy of the converted digital signal and determines whether or not the energy of the digital signal is equal to or larger than a preset value.

When it is determined that the energy of the digital signal is equal to or larger than the preset value, the voice collection unit 110 removes a noise and transmit a noise-removed voice. The noise component is a sudden noise which can occur in the home environment such as air conditioning sound, cleaning sound, or music sound. When it is determined that the energy of the digital signal is less than the preset value, the voice collection unit 110 performs no processing on the digital signal and waits for another input. Accordingly, the whole audio processing procedure is not activated by the other sounds other than the user's voice so that the unnecessary power consumption can be prevented.

The first communication unit 120 performs communication with the first server (200 in FIG. 1). More specifically, the first communication unit 120 may transmit the user's voice to the first server 200, and receive the text information corresponding to the user's voice from the first server 200.

The second communication unit 130 performs communication with the second server (300 in FIG. 1). More specifically, the second communication unit 130 may transmit the received text information to the second server 300 and receive the response information corresponding to the text information from the second server 300.

To this end, the first communication unit 120 and second communication unit 130 may perform communication with the first server 200 and the second server 300 using various communication methods. For example, a first communication unit 120 and a second communication unit 130 may perform communication with the first server 200 and the second server 300 using wired/wireless LAN (Local Area Network), WAN, Ethernet, Bluetooth, Zigbee, USB (Universal Serial Bus), IEEE1394, WiFi, and so on. To do so, the first communication unit 120 and the second communication unit 130 may comprise a chip or an input port and the like corresponding to each communication method. For example, when communication is performed based on a wired LAN method, the first communication unit 120 and the second communication unit 130 may comprise a wired LAN card (not shown) and an input port (not shown).

Meanwhile, in the aforementioned exemplary embodiment, the display apparatus 100 has additional communication units 120, 130 to perform communication with the first server 200 and second server 300, but this is just an example. That is, the display apparatus 100 may obviously communicate with the first server 200 and second server 300 through one communication module.

The output unit 140 may output the response message corresponding to the user's voice, based on the response information. More specifically, the output unit 140 may output the response message as at least one form of voice or a text, and to this end, the output unit 140 may have a display unit(not illustrated) and audio output unit(not illustrated).

More specifically, the display unit (not shown) may be embodied as a Liquid Crystal Display (LCD), Organic Light Emitting Display (OLED) or Plasma Display Panel (PDP), and provide various display screens which may be provided through the display apparatus 100. Especially, the display unit (not shown) may display the response message corresponding to the user's voice as a text or image.

Herein, the display unit (not shown) may be embodied as a touch screen format which forms a multiple layer structure with a touch pad, and the touch screen may be configured to detect a touch input location, area, and touch input pressure.

Meanwhile, the audio output unit (not shown) may be embodied as an output port or speaker, and output the response message corresponding to the user's voice as voice.

The control unit 150 controls the overall operations of the display apparatus 100. More specifically, the control unit 150 may control the voice collection unit 110 to collect a user voice and control the first communication unit 120 to transmit the collected user voice to the first server 300. In addition, the control unit 150 may control the first communication unit 120 to receive text information corresponding to the user voice.

Furthermore, the control unit 150 may control the second communication unit 130 to transmit the received text information to the second server 300 and to receive the response information corresponding to the text information from the second server 300. In addition, when the response information corresponding to the text information is received from the second server 300, the control unit 150 may control the output unit 140 to output the response message corresponding to the user's voice based on the response information.

Herein, the response information may include the response message information for outputting the response message. The response message information is the response message regarding the user's voice output in the display apparatus expressed in a text format, and may output the response message corresponding to the user's voice as at least one form of voice or a text through the output unit 140.

More specifically, the control unit 150 may use a TTS engine to convert the text format response message information into voice and output the result through the output unit 140. Herein, the TTS engine is a module for converting a text into voice, and may convert a text into voice using various conventional TTS algorithms. Furthermore, the control unit 150 may configure a UI screen to include a text forming the response message information and output it through the output unit 140.

For example, when the display apparatus 100 which is implemented as a television collects a user voice of "Let me know the most popular program", the second server 300 may transmit "the most popular program is OOO (broadcasting program)" in a text form to the display apparatus 100. In this case, the control unit 150 may convert "the most popular program is OOO (broadcasting program)" into a voice and output the voice through the output unit 140, or may control to configure a UI screen to include the text of "the most popular program is OOO (broadcasting program)" and output the UI screen through the output unit 140.

As such, cases where the control unit 150 outputs the response message corresponding to the user's voice without performing an additional function in the display apparatus may include an intention to perform a function that may not be performed in the display apparatus 100 or a case where a question is asked requiring an answer.

For example, in a case where the display apparatus 100 is embodied as a smart TV and a user voice which expresses, "Call XXX" is input but the smart TV does not provide a video-telephony function, the control unit 150 may output a response message which expresses, "It is a function that cannot be provided", as at least one of voice or a text through the output unit 140 based on the response message information received from the second server 300 without performing an additional function. In addition, when the display apparatus 100 is embodied as a smart TV and a user voice expressing, "Tell me the name of the most popular program these-days", is input, the control unit 150 may output a response message which expresses, "The most popular program is OOO(broadcasting program)" as at least one of voice or a text based on the response message information received from the second server 300.

Meanwhile, the response information may further include a control command for controlling functions of the display apparatus 100. Herein, the control command may include a command to execute a function corresponding to a user voice from among functions executable by the display apparatus 100. Accordingly, the control unit 150 may control each element of the display apparatus 100 to perform a certain function which may be performed in the display apparatus 100 according to a product type of the display apparatus 100. For example, when the display apparatus 100 which is implemented as a television collects "Turn up the volume", as a user voice, is collected, the second server 300 may transmit a control command to turn up the volume of the display apparatus 100 to the display apparatus 100. In this case, the control unit 150 may increase audio volume output through the output unit 110 based on the control command. However, this is only an example, the control unit 150 may control each component of the display apparatus 100 so that various operations such as power on/off, channel change, and volume adjustment can be performed according to a collected user voice.

In addition, the response information may include the response message information related to a specific function performed according to the control command for controlling the functions of the display apparatus. In this case, the control unit 150 may perform the function according to the control command, and output the response message related thereto as at least one of voice or a text through the output unit 140.

For example, when the user's voice includes an expression to perform a function which may be performed in the display apparatus 100, the control unit 150 may perform the function that the user intends according to the control command received from the second server 300, and output the message related to the performed function based on the response message information as at least one of voice or a text. For instance, when the display apparatus 100 is embodied as a smart TV and a user's voice expressing, "Change the channel to no. 11 ", is input, the control unit 150 may select channel 11 according to the control command for changing to channel 11, and output the response message which expresses, "The channel has been changed to channel 11" or "The channel change has been completed" as at least one of voice or a text through the output unit 140 based on the response message information.

Meanwhile, when a user's voice having the same utterance intention is re-collected, the control unit 150 may control the output unit 140 to output a response message differentiated from the response message corresponding to the previously collected user's voice.

Herein, a user's voice having the same utterance intention may include a user's voice which is the same as the previously collected user's voice and a user's voice for inducing the same answer as the previously collected user's voice. For example, if the previously collected user's voice expresses, "When does the program currently being broadcast end?", a user's voice having the same utterance intention may include, "When does the program currently being broadcast end?", which is essentially the same question as expressed in the previous user's voice - or, for example, with respect to the utterances, "What?" or "Say that again", a user's voice which may induce the same answer as the previous user's voice.

That is, when a voice having the same intention as the previously collected user's voice is re-collected, the control unit 150 may output a response message regarding the currently collected user's voice differently from the response message output for the previously collected user's voice.

Hereinafter, a previously collected user's voice converted into a text shall be called first text information, and a user's voice collected afterwards converted into a text shall be called second text information.

In this case, the first text information and second text information may be texts where a voice sequentially collected in the display apparatus 100 has been converted. That is, in a case where a user's voice is collected in the display apparatus and a response message corresponding thereto is output and then a user's voice collected thereafter has a same utterance intention, each of the user's voice sequentially received converted into texts may be the first text information and second text information.

However, the first text information and second text information may not necessarily be limited to voice sequentially collected converted into texts. That is, when a user's voice which is the same as the previously collected user's voice is received, it may be regarded as a user's voice having the same utterance intention even if the corresponding user's voice is not sequentially received, and thus each user's voice converted into texts may be the first and second text information.

Meanwhile, the control unit 150 may output the response message corresponding to the re-collected user's voice as voice and a text through the output unit 140 based on the response information corresponding to the second text information.

That is, when the response message information corresponding to the first text information is received and the response message corresponding to the previously collected user's voice is output as voice or a text, the control unit 150 may receive the response message information corresponding to the second text information from the second server 300 and output the response message information corresponding to the currently collected user's voice as voice or a text.

For example, in a case where the previously collected user's voice expresses, "What is the name of the program currently being broadcasted?", the control unit 150 may output the response message which expresses, "The name of the program you asked is OOO(broadcasting program)" as voice output through the output unit 140 based on the response message information received from the second server 300. Next, when a user's voice such as "What is the name of the program currently being broadcasted?" or a user's voice having a same utterance intention as the previously collected user's voice such as "What?" or "Say that again" is received, the control unit 150 may output the response message such as "That name of the program you asked is OOO" as voice output or a text through the output unit 140 based on the control command and response message information received from the second server 300. Herein, the control command may be a command which makes the response message output as voice or text in the display apparatus 100.

In addition, the control unit 150 may control the output unit 140 to output the audio volume of the contents output in the display apparatus 100 to be relatively lower than the volume of the voice output as the response message, based on the response information corresponding to the second text information. Herein, the contents may include broadcasting contents and various multimedia contents etc.

More specifically, the control unit 150 may lower the volume of the contents to a predetermined level or raise the volume of the response message output as voice to a predetermined level to output a volume of the voice output as the response message to be relatively higher than the audio of the contents based on the control command received from the second server 300. As such, the control unit 150 may adjust the volume of the contents volume or response message in order to output the volume of the voice output as the response message to be relatively higher than the audio volume of the contents. In addition, the control unit 150 may adjust both the volume of the voice output as the response message and the audio volume of the contents. For example, the control unit 150 may lower the volume of the contents to a predetermined level, and output voice output as the response message at a level higher than the predetermined level.

Furthermore, the control unit 150 may output the response message corresponding to the re-received user's voice as a text where a predetermined keyword is highlighted through the output unit 140, based on the response information corresponding to the second text information.

Herein, the highlighted keyword may differ according to the utterance intention of the user. For example, if the utterance intention of the user was asking a name of a particular broadcasting program, the control unit 150 would highlight and output the name of the broadcasting program, while if the utterance intention of the user was asking a starting time of a particular broadcasting program, the control unit 150 would highlight and output the starting time of the program.

For example, in a case where the user's voice collected thereafter is "What is the ending time of the program currently being broadcasted?", the control unit 150 would output the response message which expresses, "The ending time of the program you asked is XX:XX" through the output unit 140 with the "XX:XX" portion highlighted, based on the response message information received from the second server 300.

However, this is just an example, and thus the control unit 150 may differentiate the predetermined keyword with other texts according to various methods. That is, the control unit 150 may display the keyword in a bigger size, or change the color and output the keyword.

Meanwhile, in the aforementioned exemplary embodiment, the response message information transmitted from the second server 300 has a text format, but this is just an example. That is, the response message information may be the voice data itself which forms the response message output in the display apparatus 100, or a portion of the voice data forming the corresponding response message, or a control signal for outputting the corresponding response message using the voice or text prestored in the display apparatus 100.

Accordingly, the control unit 150 may output the response message in consideration of the type of the response message information. More specifically, when the voice data itself which forms the response message is received, the control unit 150 may process the corresponding data in a form outputtable in the output unit 140 and output it.

Meanwhile, when the control signal for outputting the response message is received, the control unit 150 may search for the data matching the control signal among the prestored data, and process the searched voice or text data in an outputtable form and output it through the output unit 140. To this end, the display apparatus may be storing voice or text data for providing the response message related to performing the functions, or voice or text data etc. related to requesting for information provision. For example, the display apparatus may be storing data in a complete sentence form such as "Changing channel has been completed", or some data which form a sentence such as "Changed to channel...". In this case, the channel number which completes the corresponding sentence may be received from the second server 300.

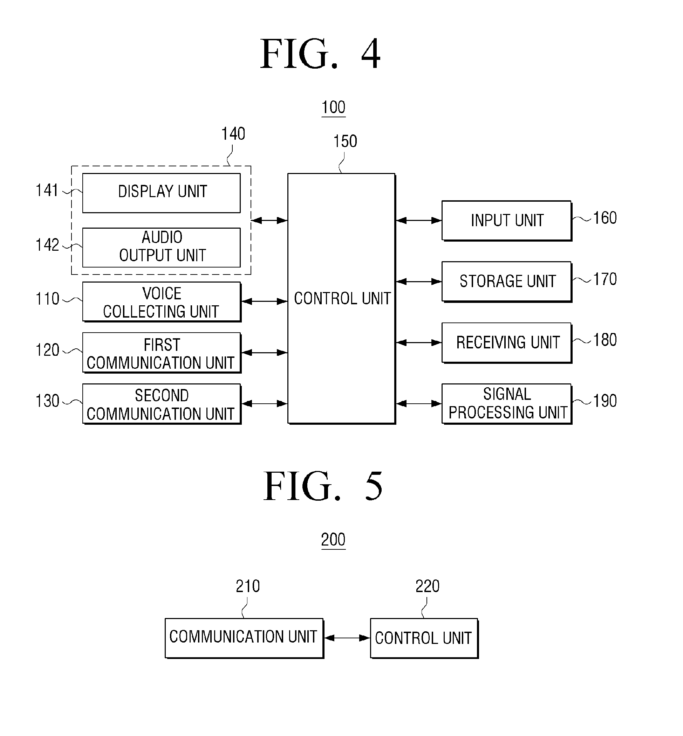

FIG. 4 is a block diagram for explaining a detailed configuration of the display apparatus illustrated in FIG. 3. According to FIG. 4, the display apparatus 100 may further include an input unit 160, storage unit 170, receiving unit 180, and signal processing unit 190 besides the elements illustrated in FIG. 3. Of among the elements illustrated in FIG. 4, the elements which overlap with the elements in FIG. 3 have the same functions, and thus detailed explanation is omitted.

The input unit 160 is an input means for receiving various user manipulations and transmitting the inputs to the control unit 150, and may be embodied as an input panel. Herein, the input panel may be configured in various methods such as a touch pad, or a key pad which has a number key, special key, letter key, or a touch screen. Not only that, the input unit 160 may be embodied as an IR receiving unit (not illustrated) for receiving a remote signal transmitted from a remote control for controlling the display apparatus 100.

Meanwhile, the input unit 160 may receive various user manipulations for controlling functions of the display apparatus 100. For example, in a case where the display apparatus 100 is embodied as a smart TV, the input unit 160 may receive user manipulations for controlling functions of the smart TV such as power on/off, channel changing, and volume changing etc. In this case, the control unit 150 may control other elements to perform various functions corresponding to a user manipulation input through the input unit 160. For example, when a power off command is input, the control unit 150 may block power supplied to each element, and when a channel change is input, the control unit 150 may control the receiving unit 180 to select a channel selected according to the user manipulation.

Especially, the input unit 160 receives a user manipulation for disclosing a voice recognition mode for collecting user's voice. For example, the input unit 160 is embodied as a touch screen form together with the display unit, and displays an object (for example an icon) for receiving a voice recognition mode. Meanwhile, the input unit 160 may also have an additional button for receiving the voice recognition mode. When a user manipulation for disclosing the voice recognition mode is input through the input unit 160, the control unit 150 may collect a user's voice uttered within a predetermined distance. In addition, the control unit 150 may receive response information corresponding to the user's voice collected through communication with the first server 200 and second server 300, to output a response message or control so as to perform a particular function.

The storage unit 170 is a storage medium where various programs necessary for operating the display apparatus 100 is stored, and may be embodied as a memory and HDD (Hard Disk Drive) etc. For example, the storage unit 170 may have a ROM for storing a program for performing operations of the control unit 150 and a RAM for temporarily storing data according to operation performance of the control unit 150. In addition, the storage unit 170 may further have an Electrically Erasable and Programmable ROM (EEPROM) for storing various reference data.

In particular, the storage unit 170 may prestore various response messages corresponding to the user's voice as voice or text data. Accordingly, the control unit 150 may read from the storage unit 170 the voice or text data corresponding to the response message information (especially control signal) received from the second server 300 and output it through an audio output unit 142 or display unit 141. In this case, the control unit 150 may perform a signal processing such as decoding etc. on the voice data, amplify the decoded voice data, and output it through the audio output unit 142, and may configure a UI screen to include a text which forms the text data and output it through the display unit 141. Although in the aforementioned exemplary embodiment, the control unit 150 performs a signal processing on the voice and text data read from the storage unit 170, the control unit 150 may also control the signal processing unit to perform a signal processing on the voice and text data.

The receiving unit 180 receives various contents. More specifically, the receiving unit 180 receives contents from a broadcasting station which transmits broadcasting program contents using a broadcasting network or a web server which transmits contents files using the internet. In addition, the receiving unit 180 may receive contents from various record medium player provided inside the display apparatus 100 or connected with the display apparatus 100. A record medium player refers to a device which plays contents stored in various types of record media such as a compact disc (CD), digital versatile disc (DVD), hard disk, blu-ray disk, memory card, and universal serial bus (USB) memory etc.

In an exemplary embodiment where contents are received from a broadcasting station, the receiving unit 180 may be embodied as a structure which includes elements such as tuner (not illustrated), demodulator(not illustrated), and equalizer(not illustrated) etc. On the other hand, in an exemplary embodiment where contents are received from a source such as a web server, the receiving unit 180 may be embodied as a network interface card (not illustrated). Otherwise, in an exemplary embodiment where contents are received from various record medium players, the receiving unit 180 may be embodied as an interface unit (not illustrated) connected to a record medium player. As such, the receiving unit 180 may be embodied as various forms according to exemplary embodiments.

The signal processing unit 190 performs signal processing on contents so that contents received through the receiving unit 180 may be output through the output unit 140.

More specifically, the signal processing unit 190 may perform operations such as decoding, scaling and frame rate conversion etc. on a video signal included in the contents, and convert the video signal into a form outputtable from the display unit 100. In addition, the signal processing unit 190 may perform signal processing such as decoding etc. on the audio signal included in the contents and convert it into a form outputtable from the audio output unit 112.

FIG. 5 is a block diagram for explaining a configuration of the first server illustrated in FIG. 1. As illustrated in FIG. 5, the first server 200 includes a communication unit 210 and control unit 220.

The communication unit 210 performs communication with the display apparatus 100. More specifically, the communication unit 210 may receive a user's voice from the display apparatus 100, and transmit the text information corresponding to the user's voice to the display apparatus 100. To this end, the communication unit 210 may include various communication modules

The control unit 220 controls overall operations of the first server 200. Especially, when the user's voice is received from the display apparatus 100, the control unit 220 generates text information corresponding to the user's voice, and controls the communication unit 210 to transmit the generated text information to the display apparatus 100.

More specifically, the control unit 220 uses the STT (Speech to Text) engine to generate the text information corresponding to the user's voice. Herein, the STT engine is a module for converting the voice signal to a text, and the STT engine may convert the user's voice into a text using various STT algorithms.

For example, the control unit 220 detects a start and end of the voice uttered by the user and determines a voice section. More specifically, the control unit 220 may calculate energy of the received voice signal, classify an energy level of the voice signal according to the calculated energy, and detect the voice section through a dynamic programming. In addition, the control unit 220 may detect a phoneme which is the minimum unit of voice based on an acoustic module within the detected voice section to generate phoneme data, and apply an HMM probability (Hidden Markov Model) model to the generated phoneme data to convert the user's voice into a text.

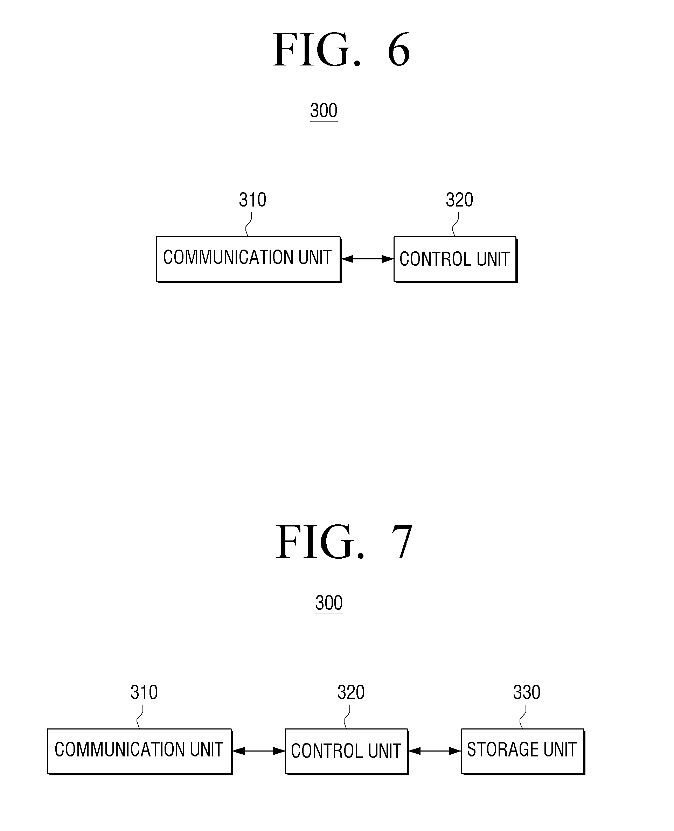

FIG. 6 is a block diagram for explaining a configuration of the second server illustrated in FIG. 1. As illustrated in FIG. 6, the second server 300 includes a communication unit 310 and a control unit 320.

The communication unit 310 receives text information corresponding to the user's voice collected in the display apparatus 100. In addition, the communication unit 310 may transmit the response information corresponding to the communication unit 310 text information to the display apparatus 100.

To this end, the communication unit 310 may include various communication modules such for performing communication with the display apparatus 100.

In addition, the communication unit 310 may perform communication with the web server(not illustrated) through an internet network, and transmit various search keywords to the web server to receive web search results accordingly. Herein, a search keyword may include various keywords such as weather related keywords (for instance, name of region, temperature, rainfall probability etc.) and contents related keywords(for instance movie title, movie opening data, singer etc.) which can be searched in the web, and various search keywords may be prestored in the second server 300.

The control unit 320 controls overall operations of the second server 300. In particular, the control unit 320 may control so that response information corresponding to the received text information is generated, and that the generated response information is transmitted to the display apparatus 100 through the communication unit 310. More specifically, the control unit 320 may analyze the text information to determine the utterance intention included in the user's voice, and control the communication unit 310 to transmit the response information corresponding to the determined utterance intention to the display apparatus 100.

To this end, the control unit 320 may detect a corpus database where a dialogue pattern matching the received text exists, and determine a service domain where the user's voice belongs to. Here, the service domains may be categorized into "broadcasting", "VOD", "application management", "apparatus management", "information(weather, stock, news, and the like), and etc. according to a subject in which the voice uttered by the user is included. However, this is only an example, the service domains may be classified according to other various subjects.

In addition, the corpus database is provided by service domain, so as to store a dialogue pattern of each service domain. Herein, the corpus database may be implemented to store exemplary sentences and the corresponding responses. That is, the second server 300 may store a plurality of exemplary sentences and responses to each sentence for each service domain. In addition, the second server 300 may tag information to interpret the exemplary sentences and expected responses to the sentences to each sentence and store the same.

For example, in a case where the second server 300 has a first corpus database on the broadcasting service domain and a second corpus database on the weather service domain, the first corpus database may store various dialogue patterns which may occur in the broadcasting service domain.

For example, suppose a case where the exemplary sentence of "when does the program start?" is stored in a broadcasting service domain.

In this case, the second server 300 may tag information to interpret sentences such as "when does the program start?"to the corresponding sentence and store the same. Specifically, the second server 300 may tag information that "program" means a broadcasting program, "when ... start" is to ask about a broadcasting time, and "when ... ?" means it is an interrogative sentence to the corresponding sentence and store the same.

In addition, the second server 300 may tag response to "what does the program start?" to the corresponding sentence and store the same. Specifically, the second server 300 may tag "which program do you want to know?" as a response and store the same.

However, this is only an example, and the second server 300 may store the sentence, "when does OOO (name of a broadcasting program) start?", and tag information to interpret the sentence and a response to the corresponding sentence and store the same.

Specifically, with respect to the sentence such as "when does OOO (name of a broadcasting program) start?", the second server 300 may tag information that "OOO (name of a broadcasting program)" means a broadcasting program, "when... start" is to ask about a broadcasting time, and "when...?" means it is an interrogative sentence to the corresponding sentence and store the same. In addition, the second server 300 may tag information that a word related to a broadcasting program appears in a sentence such as "when ... ?" to the corresponding sentence and store the same. Herein, the word related to a broadcasting program may include the name of a broadcasting program, an actor, and a producer.

In addition, the second server 300 may tag a response to "when does OOO (name of a broadcasting program) start?" to the corresponding sentence and store the same. Specifically, the second server 300 may tag "the broadcasting time of <the name of the broadcasting program> you asked is <broadcasting time>" as a response to "when does OOO (name of a broadcasting program) start?" and store the same.

As such, the second server 300 may store various conversation patterns in a broadcasting service domain.

In addition, the second corpus database may store a dialogue pattern which may occur in the weather service domain.

For example, suppose a case where "what is the weather like in OOO (name of an area)?" is stored in a weather service domain.

In this case, the second server 300 may tag information to interpret the sentence such as "what is the weather like in OOO (name of an area)?" to the corresponding sentence and store the same. Specifically, the second server 300 may tag information that "OOO (name of an area)" means the name of an area, "what is the weather like.." is to ask about weather, and "what ... ?" means that it is an interrogative sentence to the corresponding sentence and store the same.

In addition, the second server 300 may tag a response to "what is the weather like in OOO (name of an area)?" to the corresponding sentence and store the same. Specifically, the second server 300 may tag "Do you want to know the temperature?" as a response to "what is the weather like in OOO (name of an area)?" and store the same.

However, this is only an example, and the second server 300 may store the sentence of "what is the temperature of OOO (name of an area)?", and may tag information to interpret the corresponding sentence and the response of "the temperature of OOO (name of an area) is <temperature>" to the corresponding sentence and store the same.

As such, the second server 300 may store various conversation patterns in a weather service domain.

In the above exemplary embodiment, exemplary sentences and the corresponding responses stored in the second server 300 are described. However, this is only an example, and various exemplary sentences and corresponding responses may be stored in each service domain.

In such a case, when the text "When does the program start?" is received from the display apparatus 100, the control unit 320 may determine that the user's voice collected in the display apparatus 100 belongs to the broadcasting service domain, and when the text "What is the weather like in OO(name of region)?" is received from the display apparatus 100, the control unit 320 may determine that the user's voice collected in the display apparatus 100 belongs to the weather service domain. That is, the control unit 320 may compare a received text with sentences stored in each service domain, and determine a service domain where a sentence matching with the received text belongs as a service domain including a user's voice.

Next, the control unit 320 extracts a dialogue act, main action and component slot from the user's voice, based on the service domain where the user's voice belongs to. For example, the control unit 320 may extract the dialogue act and main action using an Maximum Entropy Classifier (MaxEnt) in the user's voice, and extract the component slot using a Conditional Random Field (CRF). However, it is not limited thereto, and thus it is possible to extract a dialogue act, main action and component slot in various methods that are already well known. For example, the control unit 320 may extract a dialogue act, a main action, and a component slot from a user voice using information tagged to a sentence matched with the user voice.

Herein, a dialogue act represents whether or not a subject sentence is a statement, request, wh-question, or YN-question, based on a classification criteria related to a type of the sentence. A main action is semantic information which represents an act that a subject utterance wants through a dialogue in a particular domain. For example, in the broadcasting service domain, a main action may include a TV on/off, program search, program time search, and program reservation etc. A component slot is individual information on a particular domain shown in utterance, that is, additional information for specifying a meaning of an act intended in a particular domain. For example, a component slot in the broadcasting service domain may include a genre, name of program, starting time, channel name, and actor/actress name etc.

Furthermore, the control unit 320 may use the extracted dialogue act, main action, and component slot to determine the utterance intention of the user's voice, and generate response information corresponding to the determined utterance intention and transmit the generated response information to the display apparatus 100.

Herein, the response information includes response message information corresponding to the user's voice. Response message information is a response message regarding the user's voice output in the display apparatus 100 in a text format, and the display apparatus 100 may output the response message corresponding to the user's voice based on the response message information received from the second server 300.

More specifically, the control unit 320 may extract an answer to the determined utterance intention from the corpus database, and convert the extracted answer into a text to generate the response message information.

For example, in a case where the user's voice converted into a text "When does OOO(broadcasting program) start?" is received from the display apparatus 100, the control unit 320 searches for the corpus database where the dialogue pattern which matches the user's voice exists, and determines that the user's voice "When does OOO start?" is included in the broadcasting service domain.

In addition, through the dialogue act, the control unit 320 determines that the sentence type of the voice is a "question", and through the main action and component slot, the control unit 320 determines that it is the "program starting time" of "OOO" that the user wants. As a result, the control unit 320 may determine that the utterance intention included in the user's voice is "asking" the "program starting time" of "OOO".

Next, in response to the utterance intention of "asking" the "program starting time" of "OOO", the control unit 320 may extract the answer "The starting time of OOO which you requested is..." from the corpus database of the broadcasting service domain. That is, the control unit 320 may search a response matched with "When is the time to start ○○○ (the name of the program)?" from the corpus database of a broadcasting service domain, and extract "the starting time of the program for ○○○ is ..." as a response.

In this case, the control unit 320 may use an Electronic Program Guide (EPG) information to search for the broadcasting starting time of "OOO", and generate response message information to transmit to the display apparatus 100.

As another example, in a case where the user's voice converted into a text which expresses, "What is the temperature of Seoul" is received from the display apparatus 100, the control unit 320 may search for the corpus database where a dialogue pattern which matches the user's voice exists, and determine that the user's voice which expresses, "What is the temperature of Seoul?" is included in the weather service domain.

Furthermore, the control unit 320 determines that the sentence type of the corresponding voice is a "questioning type" through the dialogue act, and determines that the voice intends to know the "weather" of "Seoul" through the main action and component slot. As a result the control unit 320 may determine that the utterance intention included in the user's voice is "asking" the "weather" of "Seoul".

Next, in response to the utterance intention of "asking" the "weather" of "Seoul", the control unit 320 extracts an answer "The temperature of Seoul which you requested is..." from the corpus database of the weather service domain. In this case, the control unit 320 may extract a prestored keyword from the user's voice, and control the communication unit 310 to transmit the extracted keyword to the server to receive search information related to the corresponding keyword. That is, the control unit 320 may extract "Seoul" and "Temperature" from the user's voice as keywords, transmit the keywords to the web server, receive a search result on the temperature of Seoul from the web server, and transmit the response message information "The temperature of Seoul which you requested is 23°C" to the display apparatus 100.

Meanwhile, in a case where the display apparatus 100 is storing some of the sentence data of the response message, the control unit 320 may transmit some of the text to complete the corresponding sentence to the display apparatus 100.

For example, in a case where the user's voice converted into a text which expresses, "Change the channel to O" is received from the display apparatus 100, the control unit 320 may determine that the utterance intention of the corresponding voice is "requesting" a "channel change" to "O".

Accordingly, the control unit 320 may generate a control command for performing a channel change to "O" in the display apparatus 100, and transmit the control command to the display apparatus 100. Herein, in a case where the display apparatus 100 is storing text data such as "The channel has been changed to ..", the control unit 320 may control so that "O" is generated as response message information, transmitted to the display apparatus 100, and a response message which expresses, "The channel has been changed to O" is output in the display apparatus 100. In this case, the control unit 320 may transmit an additional control signal for outputting the voice data prestored in the display apparatus to the display apparatus 100.

In addition, the response information may further include a control command for controlling functions of the display apparatus 100. That is, the control unit 320 may generate a control command so that functions corresponding to the utterance intention of the user can be performed in the display apparatus 100.

To this end, the second server 300 may be prestoring a control command corresponding to the user's utterance intention. For example, in a case where the user's utterance intention is channel changing, the second server 300 matches the control command for changing channel of the display apparatus 100 and stores the control command, and in a case where the utterance intention of the user is a reserved recording, the second server 300 matches the control command for performing the reserved recording function of a particular program in the display apparatus 100 and stores the control command.

For example, in a case where the user's voice converted into a text which expresses, "Reserve OOO(broadcasting program)" is received from the display apparatus 100, the control unit 320 may search for the corpus database where the dialogue pattern which matches the user's voice exists, and determine that the user's voice "Reserve OOO" is included in the broadcasting service domain.

In addition, through a dialogue act, the control unit 320 determines that the corresponding voice is a sentence type related to "requesting", and through a main action and component slot, the control unit 320 determines that the user wants "program reservation" on "OOO". As a result, the control unit 320 may determine that the utterance intention included in the user's voice is "requesting" the "program reservation" on "OOO".

Next, the control unit 320 may detect a control command corresponding to the utterance intention of "requesting" the "program reservation" on "OOO", and generate a control command for performing a function of reserved recording of "OOO" in the display apparatus 100. In this case, in response to the utterance intention of "requesting" the "program reservation" on "OOO", the control unit 320 may extract the response message information "Reservation has been made for recording OOO" from the corpus database of the broadcasting service domain and transmit it to the display apparatus 100.

In addition, the control unit 320 may determine utterance intention of a user by using information tagged to a sentence matched with a received text.

For example, suppose a case where the text of "when does the program for ○○○ (the name of the program) start?" is received from the display apparatus 100.

In this case, the control unit 320 may determine that the received text belongs to a broadcasting service domain and extract a dialogue act, a main action, and a component slot from the user voice using information tagged to "when does the program for ○○○ (the name of the program) start?" which is the sentence matched with the received text in the broadcasting service domain so as to find out the utterance intention of the user voice.

That is, as information to interpret the sentence of "when does the program for ○○○ (the name of the program) start?", the information that "○○○ (the name of the program)" means a broadcasting program, "when ... start" is to inquire about the broadcasting time, and "when ...?" means it is an interrogative sentence is tagged. Accordingly, based the information, the control unit 320 may determine that the dialogue act of the received text of "when does the program for ○○○ (the name of the program) start?" is an interrogative sentence, the main action is inquiring about the broadcasting time, and the component slot is ○○○ (the name of the program). Accordingly, the control unit 320 may determine that the utterance intention of the user voice is to "inquire" about "the broadcasting time" of "○○○ (the name of the program)". In addition, in response to the utterance intention of "inquiring" about "the starting time of the program" of "○○○", the control unit 320 may extract "the starting time of ○○○ is <broadcasting time>" from the corpus database of the broadcasting service domain.

In this case, the control unit 320 may generate a sentence in a complete form by completing a blank included in a searched response.

For example, the control unit 320 may complete the response of "the broadcasting time of <blank (name of a broadcasting program> is <broadcasting time>" by write "○○○ (the name of the program)" in the blank. In addition, the control unit 320 may search the broadcasting time of "○○○ (the name of the program)" using EPG (Electronic Program Guide) information and write the searched broadcasting time in another blank of <broadcasting time>. Accordingly, the control unit 320 may generate response message information corresponding to the user voice using the complete sentence of "the broadcasting time of ○○○ (the name of the program) is 7 o'clock on Saturday", and transmit the generated response message information to the display apparatus 100.

Accordingly, the display apparatus 100 may output "the broadcasting time of ○○○ (the name of the program) is 7 o'clock on Saturday" in either a voice or a text form based on the response message information received from the second server 300.

Meanwhile, when it is unable to determine the utterance intention of the user included in the currently received user's voice, the control unit 320 may refer to the previously received user's voice and determine the utterance intention of the currently received user's voice. That is, the control unit 320 may compare the currently received user's voice with the dialogue patterns stored in the corpus database to determine whether or not the currently received user's voice is the initial user utterance in the dialogue pattern, and if it is determined that the currently received user's voice is not the initial user utterance, the control unit 320 may refer to the previously received user's voice and determine the utterance intention of the currently received user's voice.

For example, in a case where the user's voice "When is OOO(broadcasting program) broadcasted?" is input and then the user's voice "When?" is input, when it is determined that the user's voice "When?" is not the initial user utterance in the broadcasting service domain, the control unit 320 determines the utterance intention of "When?" based on the previously received user's voice "When is OOO broadcasted?".

That is, in order to determine the utterance intention of the user's voice "When?" for which the component slot cannot be extracted, the control unit 320 may determine that the utterance intention of "When?" is "asking" the "program starting time" of "OOO" using "OOO" included in the previously received user's voice.

Meanwhile, when the utterance intentions in the first and second text information are the same, the control unit 320 may generate response information corresponding to the second text information to be differentiated from the response information corresponding to the first text information, and transmit the generated response information to the display apparatus 100.

That is, after the control unit 320 generates the response information corresponding to the text information received from the display apparatus 100 and transmits the generated response information to the display apparatus 100, if text information having the same utterance intention as the previously received text information is received, the control unit 320 may generate response information corresponding to the currently received text information to be differentiated from the previously received text information.

More specifically, when the first and second text information including the same utterance intention are sequentially received, the control unit 320 may generate response information corresponding to the first text information so that a response message is output as voice or a text in the display apparatus 100, and generate response information corresponding to the second text information so that a response message is output as voice or a text in the display apparatus 100.

To this end, when generating the response information corresponding to the second text information and transmitting the generated response information to the display apparatus 100, the control unit 320 may generate a control command so that a response message is output as both voice and a text in the display apparatus 100, and transmit the control command to the display apparatus 100.

In addition, when the first and second text information having the same utterance intention are sequentially received, the control unit 320 may generate response information corresponding to the second text information so that audio volume on the contents output in the display apparatus 100 is relatively lower than the volume of the voice output as the response message.

To this end, when generating the response information corresponding to the second text information and transmitting the generated response information to the display apparatus 100, the control unit 320 may generate a control command for raising the volume of the voice output as a response message to a predetermined level and transmit the control command to the display apparatus 100. In addition, the control unit 320 may generate a control command for lowering the volume of the contents to the predetermined level and for adjusting the volume of the voice output as a response message to be a predetermined level higher than the audio volume of the contents, and transmit the control command to the display apparatus 100.

In addition, when the first and second text information having the same utterance intention are sequentially received, the control unit 320 may generate response information corresponding to the first text information so that a response message is output as a text in the display apparatus 100, and generate response information corresponding to the second text so that a response message is output in the display apparatus 100 as a text with a predetermined keyword highlighted.

To this end, when outputting a response message corresponding to the second text information in the display apparatus 100, the control unit 320 may generate a control command for highlighting a keyword which becomes the core answer to the utterance intention in the text forming the response message, which is searched information in response to the user's utterance intention, and the control unit 320 may transmit the control command to the display apparatus 100.

For example, when the user's utterance intention included in the text information is "asking" the "program starting time" of "OOO", the control unit 320 transmits "It starts on Saturday, at 7 o'clock" in a text format to the display apparatus 100. Herein, the control unit may also transmit a control command for highlighting "Saturday 7 o'clock" which is the core answer to the user's utterance intention together to the display apparatus 100.

FIG. 7 is a block diagram for explaining a detailed configuration of the second server illustrated in FIG. 6. According to FIG. 7, the second server 300 may further include a storage unit 330 besides the components illustrated in FIG. 6. The components in FIG. 7 overlapping with those illustrated in FIG. 6 have the same functions, and thus detailed explanation thereof is omitted.

The storage unit 330 stores various information for generating response information. More specifically, the storage unit 330 has a corpus database for each service domain, to store a dialogue pattern per service domain. In addition, the storage unit 330 may match a control command per user's utterance intention, and store the control command.

Meanwhile, the first server 200 and second server 300 in FIGs. 1 to 7 are provided separately, but this is just an example. That is, the first server 200 and the second server 300 may be embodied as one server. In this case, the display apparatus 100 may not receive text information corresponding to the user's voice, convert the user's voice into a text in a server embodied as one(not illustrated), and generate response information corresponding to the user's voice based on the converted text and transmit to the display apparatus 100.

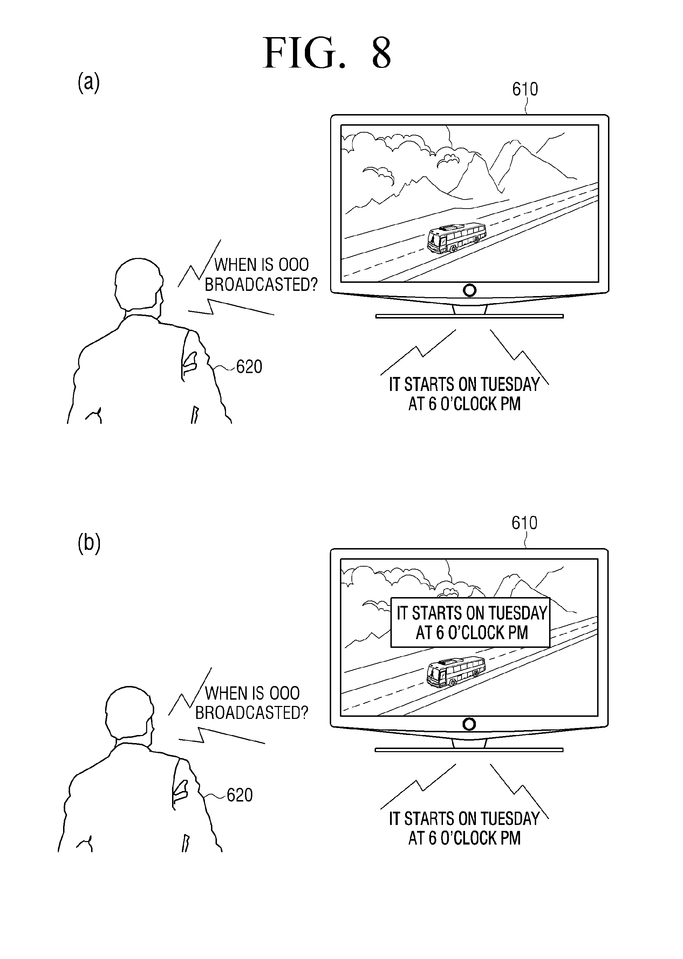

FIGs. 8 to 10 are views for explaining operations of a dialogue type system according to an exemplary embodiment.

For example, as in (a) of FIG. 8, in a case where a user 620 watching a broadcasting program uttered "When is OOO(broadcasting program) broadcasted?", the display apparatus 610 may output a response message corresponding to the collected "When is OOO broadcasted?" as voice through an interconnected operation with the first and second servers(not illustrated). That is, as in (a) of FIG. 8, the display apparatus 610 may receive response message information from the second server, and output a response message which expresses, "On Tuesday, at 6 o'clock pm" as voice data in response to the user's voice "When is OOO broadcasted?".

Next, in a case where the user's voice having the same utterance intention is re-collected, the display apparatus 610 may output a response message regarding the currently received user's voice as voice data or a text so that it is differentiated from the response message on the previously received user's voice. For example, as in (b) of FIG. 8, when the display apparatus 610 re-collects the voice of the user 620 which expresses, "When is OOO broadcasted?", the display apparatus 610 may output "On Tuesday, at 6 o'clock pm" in response to the re-collected "When is OOO broadcasted?", based on the response information received from the second server.

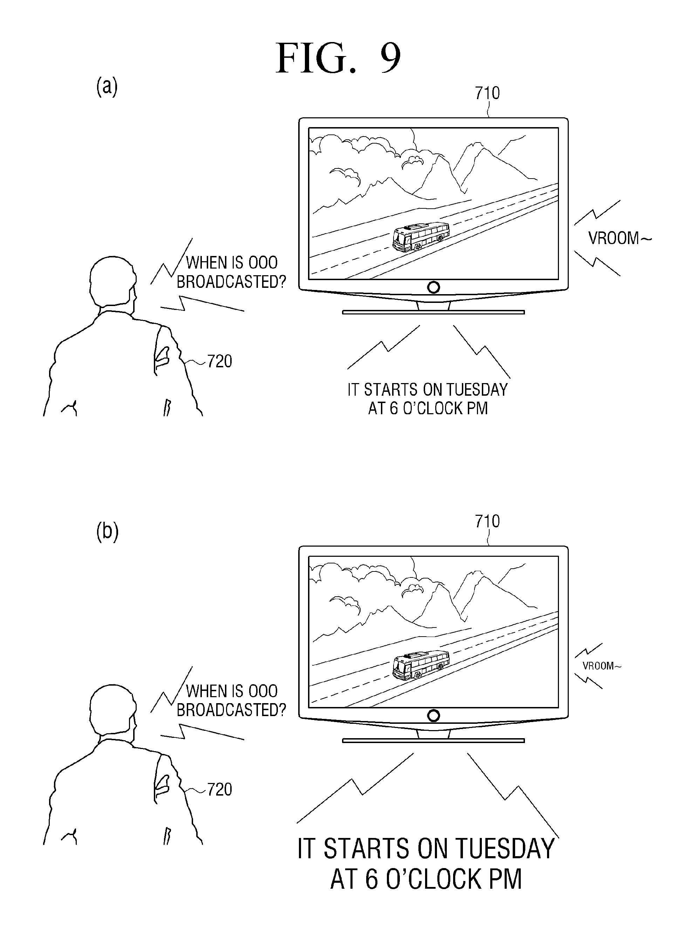

Otherwise, as in (a) in FIG. 9, in a case where a user 720 watching a broadcasting program utters "When is OOO(broadcasting program) broadcasted?", the display apparatus 710 may output a response message corresponding to the collected "When is OOO broadcasted?" as voice data through an interconnected operation with the first and second servers(not illustrated). That is, as in (a) in FIG. 9, the display apparatus 710 may receive response message information from the second server, and output a response message "On Tuesday, at 6 o'clock pm" as voice data in response to the user's voice regarding "When is OOO broadcasted?".

Next, in a case where the user's voice having the same utterance intention is re-collected, the display apparatus 710 may adjust audio volume output in the display apparatus 710 to be differentiated from the response message on the previously received user's voice. For example, as in (b) in FIG. 9, in a case where the display apparatus 710 re-collects the user's 720 voice which expresses, "When is OOO broadcasted?, the display apparatus 710 may lower the volume "Vroom" which is the audio of the broadcasting program, and output the response message "On Tuesday, at 6 o'clock pm" output as voice at a higher volume than the audio of the broadcasting program. However, this is just an example, and thus it is also possible to lower only the volume of "Vroom" which is the audio of the program to a predetermined level, or raise the volume of "On Tuesday, at 6 o'clock pm" to the predetermined level.

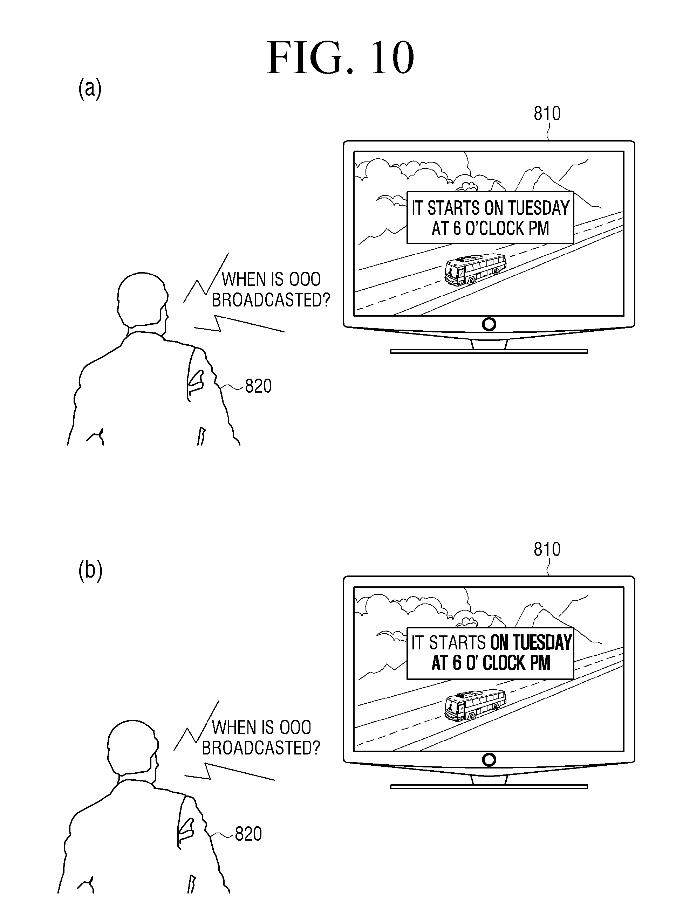

Otherwise, as illustrated in (a) in FIG. 10, in a case where a user 820 watching a broadcasting program uttered "When is OOO (broadcasting program) broadcasted?", the display apparatus 810 may output a response message corresponding to the collected "When is OOO broadcasted?" through an interactive operation with the first and second server(not illustrated). That is, as in (a) in FIG. 10, the display apparatus 810 may receive response message information from the second server, and output a response message "On Tuesday, at 6 o'clock pm" in response to the user's voice expression, "When is OOO broadcasted?", as a text.

Next, when the user's voice having the same utterance intention is re-collected, the display apparatus 810 may change a display format of a predetermined keyword in a text output according to the currently received user's voice and output the result so as to be differentiated from the previously received user's voice. For example, as in (b) in FIG. 10, when the user 820 voice expression, "When is OOO broadcasted?", is re-collected, the display apparatus 810 may highlight "Tuesday, 6 o'clock pm" in the "On Tuesday, at 6 o'clock pm" based on the response information received from the second server. Although the predetermined keyword is highlighted in the aforementioned view, this is just an example. That is, the display apparatus 810 may increase the size of "Tuesday 6 o'clock pm" to be bigger than the other text or change the color thereof and display the result.

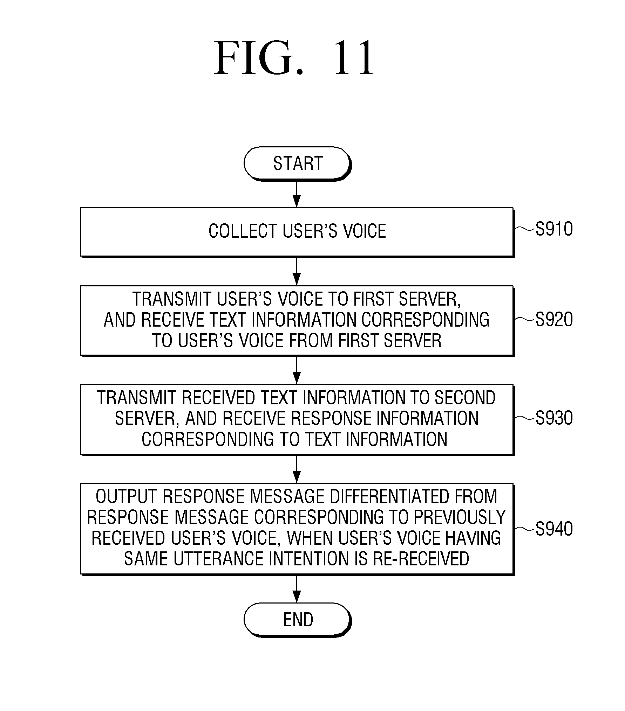

FIG. 11 is a flowchart for explaining a method for controlling a display apparatus according to an exemplary embodiment.

First, a user's voice is collected (S91 0). More specifically, the user's voice may be collected through a microphone formed in an all-in-one shape with the display apparatus or formed separately.

Next, the user's voice is transmitted to the first server, and text information corresponding to the user's voice is received from the first server (S920). And, the received text information is transmitted to the second server, and response information corresponding to the text information is received (S930). That is, the second server may analyze the text information and determine the utterance intention included in the user's voice, and transmit the response information corresponding to the determined utterance intention to the display apparatus.

Meanwhile, when the user's voice having the same utterance intention is re-collected, a response message differentiated from the response message corresponding to the previously collected user's voice is output based on the response information (S940).

More specifically, when the utterance intention in the first and second text information sequentially received are the same, the second server may generate response information corresponding to the second text information to be differentiated from the response information corresponding to the first text information and transmit the generated response information to the display apparatus.

Accordingly, it is possible to output a response message corresponding to the re-collected user's voice as voice or a text based on the response information corresponding to the second text information.

In addition, it is possible to output audio volume of the contents output in the display apparatus to be relatively lower than the volume of the voice output as the response message, based on the response information corresponding to the second text information. In addition, it is possible to output the response message corresponding to the re-collected user's voice as a text with a predetermined keyword highlighted, based on the response information corresponding to the second text information.

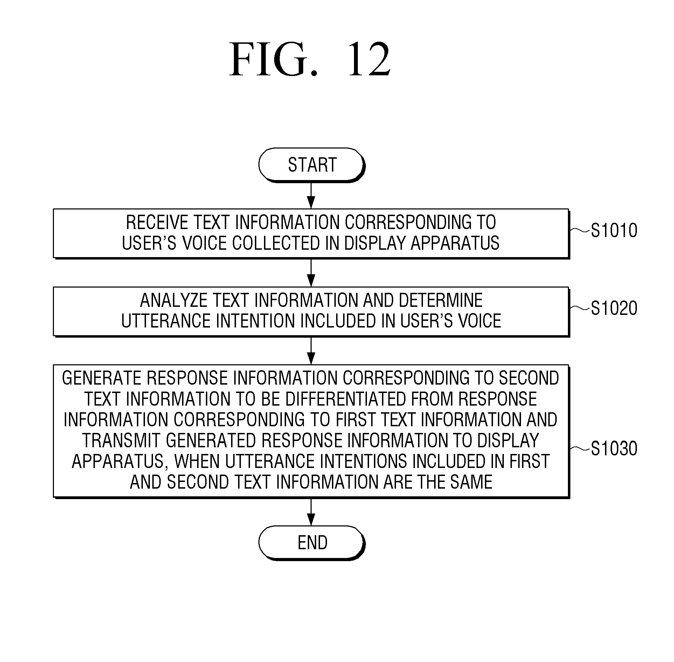

FIG. 12 is a flowchart for explaining a method for controlling a server which is interconnected with a display apparatus according to an exemplary embodiment.

First, text information corresponding to a user's voice collected in the display apparatus is received (S1010).

Next, the text information is analyzed to determine an utterance intention included in the user's voice (S1020). In this case, the display apparatus may output a response message corresponding to the user's voice as at least one of voice or a text based on the response information.

Herein, when the utterance intention included in the first and second text information are the same, response information corresponding to the second text information is generated to be differentiated from the response information corresponding to the first text information, and is transmitted to the display apparatus (S1030).

More specifically, when the first and second text information are sequentially received, the display apparatus may generate response information corresponding to the first text information to output a response message as voice or a text, and generate response information corresponding to the second text information to output a response message as voice or a text.

In addition, when the first and second text information are sequentially received, the display apparatus may generate response information corresponding to the second text information so that audio volume of contents output in the display apparatus is relatively lower than the volume of the voice output as a response message.

In addition, when the first and second text information are sequentially received, the display apparatus may generate response information corresponding to the first text information so that a response message is output as a text in the display apparatus, and generate response information corresponding to the second context information so that a response message is output as a text with a predetermined keyword highlighted.

In addition, there may be provided a non-transitory computer readable medium where a program which consecutively performs the display apparatus and method of controlling the server according to the present disclosure is stored.

A non-transitory computer readable medium is not a medium which stores data for a short time such as a register, cache, and memory etc., but a medium which stores data semi-permanently and which can be read by a device. More specifically, the aforementioned various applications or programs may be stored in a non-transitory computer readable medium such as a Compact Disk, DVD, hard disk, blue-ray disk, USB, memory card, and ROM etc.

In addition, in the aforementioned block diagram illustrated the display apparatus and server, there is a bus, but communication between each component in the display apparatus and server may be made through the bus. In addition, each device may further include a processor such as a CPU and microprocessor etc. which performs the aforementioned various steps.

Although a few embodiments of the present invention have been shown and described, it would be appreciated by those skilled in the art that changes may be made in this embodiment without departing from the principles and spirit of the invention, the scope of which is defined in the claims and their equivalents.

## Claims

1. A display apparatus (100) comprising:
a voice collector (110) configured to collect a voice of a user;
a first communicator (120) configured to transmit the voice to a first server (200), and receive text information corresponding to the voice from the first server (200);
a second communicator (130) configured to transmit the received text information to a second server (300), and receive response information corresponding to the text information;
an outputter (140) configured to output a response message corresponding to the voice based on the response information; and
a controller (150) configured to control the outputter (140) to output a second response message differentiated from a first response message corresponding to a previously collected user's voice, when a user's voice having a same utterance intention as the previously collected user's voice is re-collected.

2. The display apparatus (100) according to claim 1, wherein the second server (300) analyzes the text information to determine an utterance intention included in the voice, and transmits the response information corresponding to the determined utterance intention to the display apparatus (100).

3. The display apparatus (100) according to claim 2, wherein the second server (300) generates second response information corresponding to second text information to be differentiated from first response information corresponding to first text information and transmits the generated second response information to the display apparatus (100), when utterance intentions included in the sequentially received first text information and second text information are the same.

4. The display apparatus (100) according to claim 3, wherein the controller (150) outputs the response message corresponding to a re-received user's voice through the output unit (140) as at least one from among voice and a text, based on the second response information corresponding to the second text information.

5. The display apparatus (100) according to claim 3, wherein the controller (150) controls the outputter (140) to output an audio volume of contents output from the display apparatus (100) to be relatively lower than a volume of voice output as the response message, based on the second response information corresponding to the second text information.

6. The display apparatus (100) according to claim 3, wherein the controller (150) outputs the response message corresponding to a re-received user's voice as a text where a predetermined keyword is highlighted, based on the second response information corresponding to the second text information.

7. A server (200) which is interconnected with a display apparatus (100), the server (200) comprising:
a communicator (210) configured to receive text information corresponding to a voice of a user collected in the display apparatus (100); and
a controller (220) configured to analyze the text information to determine an utterance intention included in the voice, and control the communicator (210) to transmit response information corresponding to the determined utterance intention to the display apparatus (100),
wherein the controller (220) is configured to generate second response information corresponding to second text information to be differentiated from first response information corresponding to first text information and transmit the generated second response information to the display apparatus (100), when utterance intentions included in the first text information and second text information are the same.

8. The server (200) according to claim 7, wherein the display apparatus (100) outputs a response message corresponding to the voice as at least one from among voice and text, based on the response information.

9. The server (200) according to claim 8, wherein the controller (220) is configured to generate the first response information corresponding to the first text information so that the display apparatus (100) outputs the response message as one of the voice and the text, and generate the second response information corresponding to the second text information so that the display apparatus (100) outputs the response message as one of the voice and the text, when the first text information and second text information are sequentially received.

10. The server (200) according to claim 8, wherein the controller (220) generates the second response information corresponding to the second text information so that audio volume of contents output from the display apparatus (100) is lower than volume of voice output as the response message, when the first text information and second text information are sequentially received.

11. The server (200) according to claim 8, wherein the controller (220) generates the first response information corresponding to the first text information so that the display apparatus (100) outputs the response message as a text, and generates the second response information corresponding to the second text information so that the display apparatus (100) outputs the second response message as a text where a keyword is highlighted, when the first text information and second text information are sequentially received.

12. A control method of a display apparatus (100), the control method comprising:
collecting a voice of a user;
transmitting the voice to a first server (200), and receiving text information corresponding to the voice from the first server (200);
transmitting the received text information to a second server (300), and receiving response information corresponding to the text information; and
outputting a second response message differentiated from a first response message corresponding to a previously collected user's voice based on the response information, when a user's voice having a same utterance intention as the previously collected user's voice is re-collected.

13. The control method according to claim 12, wherein the second server (300) analyzes the text information and determines an utterance intention included in a user's voice, and transmits the response information corresponding to the determined utterance intention to the display apparatus (100).

14. The control method according to claim 13, wherein the second server (300) generates second response information corresponding to second text information to be differentiated from first response information corresponding to first text information and transmits the generated second response information to the display apparatus (100), when utterance intentions included in the sequentially received first text information and the second text information are the same.

15. A control method of a server (300) which is interconnected with a display apparatus (100), the control method comprising:
receiving text information corresponding to a voice data of a user, collected in the display apparatus (100);
analyzing the text information and determining an utterance intention included in the voice data; and
generating second response information corresponding to second text information to be differentiated from first response information corresponding to first text information and transmitting the generated second response information corresponding to the second text information, to the display apparatus (100), when utterance intentions included in the first text information and the second text information are the same.
